# EUROPÄISCHE PATENTANMELDUNG

(11) **EP 3 372 527 A1**
(43) Veröffentlichungstag der Anmeldung: **12.09.2018**
(21) Anmeldenummer: 17160248.5
(22) Anmeldetag: 10.03.2017
(51) Int. Cl.: B65D 85/804

(54) **KAPSEL ZUR ZUBEREITUNG EINES GETRÄNKEPRODUKTES**

(71) Anmelder: Delica AG, 4127 Birsfelden (CH)
(72) Erfinder: Affolter, Roland, CH-5103 Möriken (CH); Thilla, Tim, DE-79576 Weil am Rhein (DE); Brönnimann, Markus, CH-3274 Hermrigen (CH)
(74) Vertreter: Hepp Wenger Ryffel AG

(57) **Zusammenfassung**

Vorgeschlagen ist eine Kapsel (2) zur Zubereitung eines Getränkeproduktes. Die Kapsel (2) umfasst einen Kapselkörper (24), einen Deckel (25) und einen Einlass (47) zum Einleiten eines Fluids in die Kapsel (1). Der Kapselkörper (24) ist zur Bildung eines geschlossenen Aufnahmeraumes vom Deckel (25) abgedeckt und der Einlass (47) in Bezug auf ein Zentrum (Z) des Deckels (25) exzentrisch an der Kapsel (1) angeordnet. Auf dem Deckel (25) ist ein erster maschinenlesbarer Code (28) exzentrisch angebracht, insbesondere gedruckt. Der erste maschinenlesbare Code (28), insbesondere dessen Zentrum, ist in Bezug auf das Zentrum (Z) des Deckels in einem Winkelabstand (a) zum Einlass (47) angeordnet. Der Winkelabstand (α) hat einen Betrag von höchstens 70°, vorzugsweise höchstens 60°, bevorzugterweise höchstens 50°.

## Beschreibung

Die vorliegende Erfindung betrifft eine Kapsel nach dem Oberbegriff von Anspruch 1 zur Zubereitung eines Getränkeproduktes.

Im Stand der Technik sind eine Vielzahl von unterschiedlichen Portionsverpackungen und Systemen zur Herstellung von Getränken bekannt. Insbesondere Kapseln werden häufig zur Zubereitung von unterschiedlichen Heissgetränken, allen voran Kaffee oder Tee, im Heimgebrauch eingesetzt. Üblicherweise umfassen solche Kapseln, die als Einwegprodukte konzipiert sind, einen Kapselkörper zur Aufnahme der Getränkezutaten sowie einen den Kapselkörper abdeckenden Deckel. Bei den Zutaten handelt es sich meist um geröstete und gemahlene Kaffeebohnen, teilweise aber auch um getrocknete Teeblätter. Allerdings kommen auch lösliche Produkte im Allgemeinen oder Konzentrate in Frage. Bei der eigentlichen Zubereitung wird unter Druck stehendes Wasser durch die Kapsel geleitet, wodurch es zu einer Extraktion beziehungsweise zu einem Auflösen des in der Kammer enthaltenen Materiales kommt.

Damit mit ein und derselben Vorrichtung Kapseln unterschiedlichen Inhaltes (bspw. verschiedene Kaffee- oder Teesorten, lösliche Produkte, oder Konzentrate) verwendet werden können, besteht das Bedürfnis, die Betriebsparameter der Vorrichtung in Abhängigkeit des jeweils verwendeten Produktes einzustellen. Dies betrifft beispielsweise die durchzuleitende Menge an Flüssigkeit, die Extraktionstemperatur oder auch die Extraktionsgeschwindigkeit. Aus Sicherheitsgründen soll darüber hinaus verhindert werden, dass die Maschine mit nicht kompatiblen Kapseln betrieben wird.

Zu diesem Zweck ist es grundsätzlich bereits bekannt, eine Portionsverpackung mit einer Kennung und eine Getränkezubereitungsvorrichtung mit Mitteln zum Erfassen dieser Kennung auszurüsten. So beschreibt die WO 2005/079638 A1 ein Getränkeherstellungssystem mit einer Kapsel, auf deren Deckel ein maschinenlesbarer Code angebracht ist. Der Code ist in Bezug auf ein Zentrum des Deckels exzentrisch angeordnet und ferner von einem ebenfalls exzentrisch angeordneten Einlass zum Einleiten eines Fluids in die Kapsel in einem minimalen Winkelabstand von 70° positioniert. Dadurch kann angeblich vermieden werden, dass sich ein Verziehen des Deckels in einem Bereich, wo dieser Penetriert wird, auf die Lesbarkeit des Codes auswirkt. Zudem wird verhindert, dass kleine Mengen an Flüssigkeit, die während einer Getränkezubereitung im Bereich des Einlasses austreten, die Lesbarkeit des Codes beeinträchtigen.

Diese Ausgestaltung der Kapsel bedingt aber, dass gerade bei Kaffeegetränken neben dem Einlass auch ein Auslass mit einem Filterelement vorhanden sein muss. Die Bildung einer Filterfläche am Deckel der Kapsel, beispielsweise durch mehrfache Penetration desselben, ist insbesondere aus zwei Gründen nicht möglich: Einerseits sollte eine Filterfläche nicht zu nahe am Einlass angeordnet sein, da dies potentiell zu einem direkten Wiederausströmen einer durch den Einlass in die Kapsel eingeleiteten Flüssigkeit führen kann. Andererseits werden durch den grossen Winkelabstand des maschinenlesbaren Codes vom Einlass Bereiche des Deckels belegt, die prinzipiell als Filterfläche genutzt werden könnten. Einen Bereich mit angebrachtem Code gleichzeitig als Filterfläche zu nutzen stellt keine günstige Option dar, da dies die Lesbarkeit des Codes während der Getränkezubereitung beeinträchtigen würde.

Es ist daher die Aufgabe der vorliegenden Erfindung, die oben genannten Nachteile im Stand der Technik zu überwinden. Insbesondere ist es eine Aufgabe der Erfindung, eine Kapsel zur Zubereitung eines Getränkeproduktes zu schaffen, bei der trotz des Vorhandenseins eines maschinenlesbaren Codes am Deckel eine ausreichend grosse Filterfläche geschaffen werden kann. Darüber hinaus soll ein direktes Wiederausströmen einer durch den Einlass in die Kapsel eingeleiteten Flüssigkeit über eine am Deckel gebildete Filterfläche vermieden werden.

Diese Aufgaben werden durch eine Kapsel gelöst, welche die Merkmale in Anspruch 1 aufweist. Die Kapsel zur Zubereitung eines Getränkeproduktes umfasst einen Kapselkörper, einen Deckel und einen Einlass zum Einleiten eines Fluids in die Kapsel. Der Kapselkörper ist zur Bildung eines geschlossenen Aufnahmeraumes vom Deckel abgedeckt und der Einlass in Bezug auf ein Zentrum des Deckels exzentrisch an der Kapsel angeordnet. Auf dem Deckel ist ein erster maschinenlesbarer Code exzentrisch angebracht, insbesondere gedruckt. Der erste maschinenlesbare Code, insbesondere dessen Zentrum, ist in Bezug auf das Zentrum des Deckels in einem Winkelabstand α zum Einlass angeordnet. Der Winkelabstand α hat einen Betrag von höchstens 70°, vorzugsweise höchstens 60°, bevorzugterweise höchstens 50°.

Das Zentrum des Deckels wir insbesondere durch seinen geometrischen Schwerpunkt gebildet.

Durch die erfindungsgemässe Anordnung des Einlasses und des ersten maschinenlesbareren Codes an der Kapsel wird der Anteil der Fläche des Deckels, der als Filterfläche genutzt werden kann, signifikant erhöht. Es hat sich überraschenderweise - und entgegen den Beobachtungen im Stand der Technik - gezeigt, dass ein kleiner Winkelabstand zwischen dem Einlass und dem maschinenlesbareren Code keine negativen Auswirkungen auf dessen Lesbarkeit hat. Einerseits konnte bei üblicherweise verwendeten Materialien für den Deckel nur ein geringes Verziehen desselben durch eine Penetration festgestellt werden. Andererseits scheinen kleine Mengen an Flüssigkeit, die während einer Getränkezubereitung im Bereich des Einlasses austreten, die Lesbarkeit des Codes nicht zu beeinträchtigen. Dies kann unter anderem damit begründet werden, dass es sich bei dieser Flüssigkeit in erster Linie um von der Getränkezubereitungsvorrichtung bereitgestelltes Wasser handelt. Dieses hat aufgrund seiner Transparenz keinen negativen Einfluss auf die Lesbarkeit des Codes. Unter Umständen kann das Wasser sogar dazu führen, dass auf dem Code abgelagerte Verunreinigungen von diesem weggespült werden. Ein Vorteil der erfindungsgemässen Ausgestaltung der Kapsel liegt drin, dass durch die kompakte Anordnung des Einlasses und des ersten maschinenlesbaren Codes am Deckel mehr Gestaltungsfreiraum in Bezug auf die Lage und die Grösse der Filterfläche besteht. Dadurch kann eine Filterfläche in einer für Kaffeegetränke erforderlichen Grösse, je nach Art des Kaffeegetränkes, erst bereitgestellt werden. Ferner kann dadurch ein direktes Wiederausströmen einer durch den Einlass in die Kapsel eingeleiteten Flüssigkeit durch eine am Deckel gebildete Filterfläche wirkungsvoll vermieden werden.

Auf dem Deckel kann neben dem ersten maschinenlesbaren Code ein zweiter maschinenlesbarer Code exzentrisch angebracht, insbesondere gedruckt, sein. Der erste maschinenlesbare Code, insbesondere dessen Zentrum, kann in Bezug auf das Zentrum des Deckels in einem positiven Winkelabstand α und der zweite maschinenlesbare Code, insbesondere dessen Zentrum, in einem negativen Winkelabstand α' zum Einlass angeordnet sein. Die Winkelabstände α und α' können einen Betrag von höchstens 70°, vorzugsweise höchstens 60°, bevorzugterweise höchstens 50°, haben. Durch diese Ausführung der Kapsel werden die oben genannten Vorteile in Bezug auf die Anordnung des Einlasses und des maschinenlesbaren Codes von einem Code auf zwei ausgedehnt.

Dabei kann der Betrag des ersten und des zweiten Winkelabstandes α und α' gleich gross sein. Diese Anordnung hat sich aufgrund ihrer Symmetrie als besonders vorteilhaft erwiesen.

Der Kapselkörper kann in einem Randbereich eine Aussparung aufweisen. Der Winkelabstand β von der Aussparung zum Einlass kann in Bezug auf das Zentrum des Deckels einen Betrag von wenigstens 90°, vorzugsweise wenigstens 120°, bevorzugterweise wenigstens 130°, haben. Eine derartige Aussparung kann dazu dienen, die Orientierung der Kasel in einer Getränkezubereitungvorrichtung festzulegen. Durch eine Winkelbeabstandung von Aussparung und Einlass besteht mehr Flexibilität in Bezug auf die Ausgestaltung der Kapsel und der Getränkezubereitungvorrichtung.

Der Einlass kann im Inneren des Aufnahmeraumes angeordnet sein. Insbesondere kann der Einlass an den Deckel anschliessen und vorzugsweise von diesem verschlossen sein. Dadurch kann die Verteilung einer in die Kapsel eingeleiteten Flüssigkeit innerhalb derselben verbessert werden.

Es versteht sich allerdings von selbst dass der Einlass auch lediglich durch einen Bereich des Deckels gebildet sein kann, der im Zuge einer Verwendung der Kapsel mit einer Getränkezubereitungsvorrichtung penetriert wird. Es besteht dabei kein Erfordernis, dass dieser Bereich auf dem Deckel markiert ist.

Der zumindest eine maschinenlesbare Code kann ein eindimensional-maschinenlesbarer Code, insbesondere ein Strichcode, ein zweidimensional-maschinenlesbarer Code oder ein RFID-Code sein.

Wenn der zumindest eine maschinenlesbare Code ein Strichcode ist, kann dieser genormt sein. So kann es sich beispielsweise um einen Handelsstrichcode (EAN, UPC, IAN, JAN), einen 2/5-Code, einen Code 39, einen Code 93, eine Codabar, oder einen Code 128 handeln. Derartige Codes sind im Stand der Technik weit verbreitet. Sie weisen im Zusammenhang mit ihrer Erfassung eine hohe Zuverlässigkeit auf, und es steht eine Reihe von verschiedenen Systemen zur Verfügung, mit denen sie ausgelesen werden können.

Es versteht sich allerdings von selbst, dass es sich beim eindimensional-maschinenlesbaren Code nicht um einen herkömmlichen Strichcode handeln muss. So kann der Code beispielsweise beliebige Formen, unter anderem auch eine Wellenform aufweisen. Darüber hinaus kann der Code auch durch eine Aussenkontur maskiert sein.

Wenn der Code ein zweidimensional-maschinenlesbarer Code ist, kann dieser ein gestapelter Code, beispielsweise ein Codablock, ein Code 49, oder ein PDF417 sein. In Frage kommen allerdings auch Matrixcodes, wie ein QR-Code, eine Data-Matrix, ein Maxi-Code oder ein Aztec-Code. Jedoch kommen auch Punktcodes oder Composite-Codes in Frage. Allerdings sind auch sämtliche weiteren optoelektronisch lesbaren Schriften sowie Farbmarkierungen oder taktile Codierungen zur Verwendung in Kombination mit der vorliegenden Erfindung geeignet.

Zumindest ein eindimensional-maschinenlesbarer Code kann Parameter zur Zubereitung des Getränkeproduktes enthalten und/oder damit verknüpft sein. Die Parameter können insbesondere ausgewählt sein aus einer Liste bestehend aus Temperatur, Volumen, Durchflussrate und Zusammensetzung einer in die Kapsel einzuleitenden Flüssigkeit. Dadurch können bei Einlegen der Kapsel in eine Getränkezubereitungsvorrichtung deren Betriebsparameter angepasst werden. Dies ermöglicht es, mit der Getränkezubereitungsvorrichtung verschiedenartige Getränke zuzubereiten. Allerdings kann der eindimensional-maschinenlesbare Code nicht nur Parameter enthalten und/oder damit verknüpft sein, die während der Getränkezubereitung konstant bleiben. Ebenfalls ist es möglich, dass der zumindest eine eindimensional-maschinenlesbare Code eine Getränkezubereitungsroutinen enthält und/oder damit verknüpft ist. So kann die Durchflussrate durch die Kapsel während einer Kaffeezubereitung beispielsweise variieren: Erst 100%, dann 0% (Vorbrühen), später 60%. Dies ermöglicht insbesondere die Herstellung eines qualitativ hochwertigeren Kaffeegetränkes.

Der Deckel kann aus einer Verbundstruktur, insbesondere umfassend eine Aluminiumfolie und ein Vlies, gebildet sein. Die Aluminiumfolie verleiht dabei der Verbundstruktur die Dichtigkeit, welche erforderlich ist um den Kapselkörper hermetisch zu verschliessen. Durch den Einsatz eines Vlieses in der Verbundstruktur kann zusätzlich eine Filterfunktion erzielt werden, wenn die Aluminiumfolie penetriert oder geborsten ist. Alternativ zu dieser Verbundstruktur kann auch eine Kunststofffolie eingesetzt werden.

Die Kapsel kann eine Trockensubstanz, insbesondere ein Kaffeepulver, oder aber auch ein flüssiges Konzentrat enthalten. Der Kapselkörper kann entlang seiner Längsmittelachse gestaucht oder gedehnt proportioniert sein. Dadurch kann die Form des Kapselkörpers der jeweiligen Anwendung, insbesondere hinsichtlich des aufzunehmenden Substanzvolumens und/oder des Druckes der einzuleitenden Flüssigkeit, beispielsweise bei einer Extraktion des Kapselinhaltes, angepasst werden. Der Kapselkörper kann aus einem Kunststoffmaterial, insbesondere durch ein Spritzguss- oder Tiefziehverfahren, hergestellt sein. Diese Materialien und Verfahren haben sich zur Herstellung von Kapselkörpern bewährt.

Die Aussenhülle der Kapsel, nämlich der Kapselkörper und der Deckel, kann sauerstoff- und/oder aromadicht sein. Durch eine sauerstoffdichte Ausführung der Aussenhülle kann ein Eindringen von Sauerstoff in die Kapsel während der Lagerung einer darin enthaltenen Ausgangssubstanz im Wesentlichen vermieden werden. Entsprechend kann ein Altern der Ausgangssubstanz, beispielsweise von Kaffeepulver, durch Oxidation vermieden werden. Eine sauerstoffdichte Kapsel ist in der Regel auch aromadicht. Daher wird ein Austreten von in der Ausgangssubstanz enthaltenen Aromastoffen während der Lagerung derselben innerhalb der Kapsel im Wesentlichen verhindert.

Sauerstoff- und/oder Aromadichtigkeit ist erforderlich, um insbesondere bei Kaffee eine Mindesthaltbarkeit von 12 Monaten, vorzugsweise von 18 Monaten zu erreichen. Entsprechend wird im vorliegenden Zusammenhang unter einer sauerstoff- und/oder aromadichten Kapsel eine Kapsel verstanden, in welcher Kaffeepulver für eine Dauer von mindestens 12 Monaten, vorzugsweise mindestens 18 Monaten, bei Raumtemperatur an Atmosphärenluft lagerbar ist, ohne dass es zu einer Veränderung des Kaffeepulvers kommen würde, welche die Qualität eines daraus hergestellten Kaffeegetränkes signifikant beeinträchtigt.

Der Kapselkörper, bzw. die gesamte Kapsel, kann eine Oberflächenbereinigte Oxygen Transmission Rate (OTR) in der Einheit cm³ pro m² pro Tag pro 0,21 bar von weniger als 20, vorzugsweise weniger als 10, bevorzugterweise weniger als 5, haben. Die OTR gibt an, welche Menge an Sauerstoff pro Flächen- und Zeiteinheit durch den Kapselkörper diffundiert.

Des Weiteren betrifft die vorliegende Erfindung ein Getränkezubereitungssystem umfassend eine Kapsel wie oben beschrieben und eine Getränkezubereitungsmaschine. Die Getränkezubereitungsmaschine weist eine Aufnahme mit zumindest einem Lesegerät auf, die Kapsel ist in die Aufnahme einsetzbar und zumindest ein maschinenlesbarer Code ist mit dem zumindest einen Lesegerät lesbar.

Das Lesegerät kann dabei als zumindest ein Strichcode-Scanner, insbesondere als zwei rechtwinklig zueinander geordnete Strichcode-Scanner ausgebildet sein. Dies ermöglicht es, dass ein eindimensional-maschinenlesbarer Code in jeder Orientierung der Kapsel relativ zum Lesegerät lesbar ist. Allerdings kann die Aufnahme der Getränkezubereitungsmaschine auch eine Aussparung für eine Lasche des Deckels der Kapsel aufweisen. Alternativ dazu, kann die Aufnahme auch derart ausgestaltet sein, dass die Kapsel aufgrund der Form des Kapselkörpers oder daran angebrachten Fortsätzen nur in einer Orientierung in die Aufnahme einsetzbar ist. Dies erleichtert das Auslesen eines Codes auf der Kapsel, da dies in einer vorgängig festgelegten Richtung erfolgen kann.

Es ist allerdings auch möglich, dass das Lesegerät als Kamerasystem ausgebildet ist. Mit einem solchen ist der eindimensional-maschinenlesbare Code in beliebiger Orientierung zum Lesegerät zuverlässig lesbar.

Ein oben beschriebenes Getränkezubereitungssystem kann zusätzlich einen Adapter umfassen. Der Adapter kann zum Einleiten einer Flüssigkeit in die Kapsel sowie zum Ableiten einer Flüssigkeit aus der Kapsel gemeinsam mit dieser in die Getränkezubereitungvorrichtung einlegbar sein. Der Adapter kann eine Kapselseite aufweisen, an welcher Mittel zum Einleiten einer Flüssigkeit in die Kapsel sowie Mittel zum Ableiten einer Flüssigkeit aus der Kapsel angeordnet sind. Der Adapter kann darüber hinaus eine Vorrichtungsseite aufweisen, an welcher ein Einlass für eine von der Getränkezubereitungsvorrichtung bereitgestellte Flüssigkeit sowie ein Auslass angeordnet sind. Der Einlass kann mit den Mitteln zum Einleiten der Flüssigkeit in die Kapsel und der Auslass mit den Mitteln zum Ableiten der Flüssigkeit aus der Kapsel jeweils fluidmässig verbunden sein. Der Adapter kann eine im Wesentlichen scheibenförmige Form haben.

Der Adapter hat den Vorteil, dass sowohl das Einleiten der Flüssigkeit in die Kapsel als auch das Ableiten derselben aus der Kapsel an nur einer Seite der Kapsel erfolgen. Dadurch muss der Adapter die Kapsel nicht vollständig umschliessen und kann konstruktiv deutlich einfacher ausgeführt sein. Ein aufwändiges Einlegen der Kapsel in den Adapter und späteres Entfernen derselben aus diesem entfällt. Darüber hinaus ist es möglich, innerhalb gewisser Grenzen Kapseln unterschiedlicher Grösse und Gestalt mit ein und demselben Adapter zu verwenden, da die Grösse und Form der Kapsel durch diesen nicht fest vorgegeben sind. Dies ermöglicht es unter anderem, die Menge einer mit einer Kapsel eingesetzten Ausgangssubstanz zur Zubereitung eines Getränkes der jeweiligen Rezeptur anzupassen.

Die Kapselseite kann einen Einleitbereich, in welchem die Mittel zum Einleiten der Flüssigkeit in die Kapsel angeordnet sind, und/oder einen Ableitbereich, in welchem die Mittel zum Ableiten der Flüssigkeit aus der Kapsel angeordnet sind, aufweisen. Der Einleitbereich und/oder der Ableitbereich können durch zumindest ein Dichtungselement begrenzt sein, durch welches mit einer Kontaktfläche der Kapsel zumindest eine Dichtverbindung herstellbar ist. Dadurch kann ein unbeabsichtigtes Austreten von Flüssigkeit am Übergang vom Adapter zur Kapsel während der Getränkeherstellung wirkungsvoll vermieden werden. Insbesondere können der Einleitbereich und der Ableitbereich durch zumindest ein Dichtungselement voneinander getrennt sein, durch welches mit der Kontaktfläche der Kapsel eine Dichtverbindung herstellbar ist.

Dadurch kann ein unerwünschtes Überströmen von Flüssigkeit vom Einleitbereich in den Ableitbereich, ohne diese Kapsel zu passieren, wirkungsvoll vermieden werden.

Der Adapter kann, gegebenenfalls einschliesslich des Dichtungselementes, einstückig, zweistückig oder auch dreistückig, insbesondere durch Spritzguss, vorzugsweise aus einem Kunststoffmaterial, hergestellt sein. Durch die einstückige Ausführung wird die konstruktive Komplexität des Adapters weiter reduziert, wodurch dieser kostengünstiger hergestellt werden kann. Insbesondere Spritzguss ist dabei sehr gut zur Massenproduktion geeignet.

Die Mittel zum Einleiten der Flüssigkeit in die Kapsel können als zumindest ein Penetrationselement zum Penetrieren der Kontaktfläche der Kapsel ausgebildet sein. Dadurch kann ein Flüssigkeitspfad in die Kapsel auf zuverlässige Weise hergestellt werden. Insbesondere können die Mittel zum Einleiten der Flüssigkeit in die Kapsel als zumindest eine Hohlkanüle ausgebildet sein. Eine solche ist besonders gut zum Einleiten einer Flüssigkeit in die Kapsel geeignet, da nach Penetrieren der Kontaktfläche die Flüssigkeit durch die Hohlkanüle ins Innere der Kapsel leitbar ist. Allerdings kann das zumindest eine Penetrationselement auch ausgewählt sein aus einer Liste bestehend aus einer Pyramide, einem Kegel, einem Pyramidenstumpf, einem Kegelstumpf, einem Zylinder und einem Prisma.

Das zumindest eine Penetrationselement kann derart ausgebildet sein, dass die Kontaktfläche der Kapsel beim Einlegen der Kapsel und des Adapters in die Getränkezubereitungsvorrichtung und Verschliessen der Vorrichtung mit dem zumindest einen Penetrationselement penetrierbar ist. Dadurch kann die Penetration der Kontaktfläche für den Benutzer erleichtert werden, da diese unter der Verwendung der Getränkezubereitungsvorrichtung beim Schliessen des eigentlichen Kapselhalters erfolgen kann. Darüber hinaus wird die Kapsel erst unmittelbar vor der Getränkezubereitung geöffnet, was eine Kontamination oder ein Auslaufen deren Inhalts wirkungsvoll vermeidet.

Die Mittel zum Ableiten der Flüssigkeit aus der Kapsel können als zumindest ein, vorzugsweise mehrere, Penetrationselement/e, insbesondere ausgewählt aus einer Liste bestehend aus Pyramiden, Kegeln, Pyramidenstümpfen, Kegelstümpfen, Zylindern und Prismen, zum Penetrieren der Kontaktfläche der Kapsel ausgebildet sein. Derartige Penetrationselemente stellen ein wirkungsvolles Mittel zum Penetrieren der Kontaktfläche, und damit zum Herstellen eines Flüssigkeitspfades zum Ableiten der Flüssigkeit aus der Kapsel, dar. Werden mehrere Penetrationselemente eingesetzt, kann die Kontaktfläche an mehreren Stellen penetriert werden. Es wurde festgestellt, dass durch die mehrfache Penetration der Kontaktfläche die unerwünschte Bildung von bevorzugten Flüssigkeitspfaden innerhalb der Ausgangssubstanz im Inneren der Kapsel (sogenanntes Channeling) vermieden werden kann. Dadurch kann eine gute Perkolation der in der Kapsel enthaltenen Ausgangssubstanz gewährleistet werden.

Die Mittel zum Ableiten der Flüssigkeit aus der Kapsel können, insbesondere zusätzlich, als zumindest ein, vorzugsweise mehrere, Stützelement/e, insbesondere ausgewählt aus einer Liste bestehend aus Pyramiden, Kegeln, Pyramidenstümpfen, Kegelstümpfen, Zylindern und Prismen, ausgebildet sein. Das zumindest eine Stützelement kann derart ausgebildet sein, dass die Kontaktfläche der Kapsel nach dem Einlegen derselben und des Adapters in die Getränkezubereitungsvorrichtung auf dem Stützelement aufliegt. Durch einen während einer Getränkezubereitung aufgebauten Kapselinnendruck ist die Kontaktfläche dann zum Bersten bringbar. Auf diese Weise kann insbesondere bei Kaffeegetränken besonders hohe Qualität erzielt werden, da erst die Flüssigkeit in die Kapsel eingeleitet wird und die Ausgangssubstanz unter Komprimierung der in der Kapsel enthaltenen Luft benetzt wird, bevor ein Flüssigkeitspfad zum Ableiten der Flüssigkeit aus der Kapsel geschaffen wird. Darüber hinaus kann die geborstene, und optional zusätzlich auch penetrierte, Kontaktfläche ebenfalls die Funktion eines Filterelementes übernehmen.

Die Mittel zum Ableiten der Flüssigkeit aus der Kapsel, der Auslass und gegebenenfalls auch der Ableitbereich können im Zentrum des Adapters angeordnet sein. Dies ermöglicht es, dass je nach Ausführung der Getränkezubereitungsmaschine, ein Auffanggefäss für das zubereitete Getränk, beispielsweise eine Kaffeetasse, mittig zentriert direkt unterhalb des Adapters und der Kapsel aufgestellt werden kann.

Die Mittel zum Einleiten der Flüssigkeit in die Kapsel, der Einlass und gegebenenfalls auch der Einleitbereich können in einem Randbereich des Adapters angeordnet sein. Bevorzugt sind die Mittel zum Einleiten einer Flüssigkeit in die Kapsel dabei als ein insbesondere umlaufender Kanal oder eine Rinne ausgebildet. Dadurch kann das Zentrum des Adapters für andere Teile freigehalten werden. Darüber hinaus kann beim Einsatz von beispielsweise mehreren Einstechkanülen eine bessere Verteilung der Flüssigkeit über die in der Kapsel enthaltene Ausgangssubstanz erzielt werden.

Die Kapselseite des Adapters kann eine Struktur zum Festhalten und/oder Positionieren der Kapsel aufweisen. Diese Struktur kann in Form eines umlaufenden Kragens ausgestaltet sein. Eine derartige Struktur gewährleistet, dass der Adapter zur Getränkezubereitung richtig auf der Kapsel positioniert ist. Wenn die Struktur zusätzlich auch zum Festhalten der Kapsel ausgebildet ist, können Adapter und Kapsel vor der Getränkezubereitung miteinander verbunden und gemeinsam als Einheit in die Getränkezubereitungsvorrichtung eingelegt werden. Dies vereinfacht die Handhabung des Adapters durch einen Benutzer.

Der Kragen umfasst vorzugsweise eine Einbuchtung zum Eingreifen in eine Aussparung der Kapsel. Dadurch kann auch eine gewünschte gegenseitige Orientierung von Adapter und Kapsel sichergestellt werden.

Die Struktur kann Rastmittel, insbesondere in Form einer Grube und/oder einer Rastnase aufweisen, mit denen die Kapsel, insbesondere an einem flanschartigen Rand, vorzugsweise an einem umlaufenden Kragen, verrastbar ist. Damit kann die Kapsel in einer Bereitschaftsposition gehalten werden, in der die Kontaktfläche der Kapsel unmittelbar vor den oben beschriebenen Penetrationselementen gehalten ist, wobei es erst beim Einlegen der Kapsel und des Adapters in die Getränkezubereitungsvorrichtung und Verschliessen der Vorrichtung zu einer Penetration der Kontaktfläche der Kapsel kommt.

Der Auslauf kann eine Engstelle, insbesondere einen Spalt, zum Aufschäumen einer aus der Kapsel abgeleiteten Flüssigkeit aufweisen. Durch diese Ausgestaltung des Auslaufs kann beim Passieren einer Flüssigkeit eine erhöhte Scherwirkung erzielt werden. Dies erlaubt insbesondere bei der Herstellung von Kaffeegetränken eine verbesserte Crema, wie sie insbesondere bei Getränken von der Art eines Espressos typisch ist. Wenn die Engstelle in Form eines Spaltes ausgeführt ist, kann diese zusätzlich die Funktion eines Ventils wahrnehmen, welches erst unter ansteigendem Flüssigkeitsdruck innerhalb der Kapsel öffnet und damit ein frühzeitiges Austreten des Getränkes verhindert. Dies ermöglicht insbesondere ein Vorbrühen einer Ausgangssubstanz zur Zubereitung eines Kaffeegetränkes. Entsprechend wird mit dem Adapter eine tropfenweise Ausgabe der Flüssigkeit vermieden und lediglich eine kontinuierliche Ausgabe ermöglicht. Insbesondere kann ein Nachtropfen von Flüssigkeit nach erfolgter Getränkezubereitung vermieden werden, wenn die Kapsel gemeinsam mit dem Adapter aus der Getränkezubereitungsvorrichtung entfernt wird.

Der Adapter kann zumindest ein Fenster aufweisen, durch welches ein auf der Kontaktfläche der Kapsel angebrachter maschinenlesbarer Code durch die Getränkezubereitungsvorrichtung, insbesondere zum Einstellen deren Betriebsparameter, lesbar ist, wenn der Adapter gemeinsam mit der Kapsel in die Getränkezubereitungsvorrichtung eingelegt ist. Diese Ausgestaltung des Adapters stellt sicher, dass bei der Verwendung einer Kapsel stets die richtigen Parameter bei der Getränkezubereitungsvorrichtung eingestellt werden, losgelöst von der Art des verwendeten Adapters. Eine Verwechslung, welche die Einstellung von falschen Betriebsparametern bei der Getränkezubereitungsvorrichtung zur Folge haben könnte, wird damit wirkungsvoll vermieden.

Alternativ zu der oben beschriebenen Ausführung kann der Adapter auch zumindest bereichsweise derart transparent ausgebildet sein, dass ein auf der Kontaktfläche der Kapsel angebrachter maschinenlesbarer Code durch die Getränkezubereitungsvorrichtung, insbesondere zum Einstellen von deren Betriebsparametern, lesbar ist, wenn der Adapter gemeinsam mit der Kapsel in die Getränkezubereitungsvorrichtung eingelegt ist.

Weitere Vorteile und Einzelmerkmale der vorliegenden Erfindung ergeben sich aus der nachfolgenden Beschreibung mehrerer Ausführungsbeispiele und aus den Zeichnungen.

Es zeigen schematisch:
- Figuren 1 und 2:: Perspektivische Darstellungen des Kapselkörpers einer erfindungsgemässen Kapsel;
- Figur 3:: Perspektivische Darstellung einer erfindungsgemässen Kapsel;
- Figur 4:: Draufsicht auf eine erfindungsgemässe Kapsel;
- Figur 5:: Draufsicht auf einen Adapter zur Verwendung mit einer erfindungsgemässen Kapsel von der Kapselseite;
- Figur 6:: Draufsicht auf einen Adapter zur Verwendung mit einer erfindungsgemässen Kapsel von der Vorrichtungsseite;
- Figur 7:: Perspektivische Darstellung eines Adapters zur Verwendung mit einer erfindungsgemässen Kapsel von der Kapselseite;
- Figur 8:: Perspektivische Darstellung eines Adapters zur Verwendung mit einer erfindungsgemässen Kapsel von der Vorrichtungsseite;
- Figur 9:: Perspektivische Zusammenschau einer erfindungsgemässen Kapsel sowie einer für die Verwendung mit dieser vorgesehenen Adapters;
- Figuren 10 und 11:: Perspektivische Darstellungen einer erfindungsgemässen Kapsel, aufgesetzt auf einen Adapter;
- Figur 12:: Schnittansicht durch erfindungsgemässe Kapsel, aufgesetzt auf einen Adapter gemäss den Figuren 9 und 10;
- Figur 13:: Vergrösserung des Teilbereichs A aus Figur 12;
- Figur 14:: Alternative Schnittansicht einer erfindungsgemässen Kapsel, aufgesetzt auf einen Adapter gemäss den Figuren 9 und 10;
- Figur 15:: Vergrösserung des Teilbereichs B aus Figur 14;
- Figur 16:: Perspektivische Zusammenschau von erfindungsgemässer Kapsel, einem zur Verwendung mit dieser vorgesehenen Adapter sowie einer Getränkezubereitungsvorrichtung (teilweise dargestellt);
- Figur 17:: Perspektivische Schnittansicht einer Zusammenschau gemäss Figur 16;
- Figuren 18 und 19:: Schnittansichten einer erfindungsgemässen Kapsel, aufgesetzt auf einen Adapter, eingelegt in eine dafür vorgesehene Getränkezubereitungsvorrichtung (teilweise dargestellt);
- Figur 20:: Alternative Ausführungsformen eines Adapters zur Verwendung mit einer erfindungsgemässen Kapsel;
- Figur 21:: Perspektivische Schnittansicht eines weiteren Ausführungsbeispiels eines Adapters;
- Figur 22:: Schnittansicht des Adapters gemäss Figur 21 mit darauf aufgesetzter Kapsel;
- Figur 23:: Vergrösserung des Teilbereichs C aus Figur 22;
- Figur 24:: Weitere Schnittansicht von Adapter gemäss Figur 21 mit darauf aufgesetzter Kapsel;
- Figur 25:: Vergrösserung des Teilbereichs D aus Figur 24.

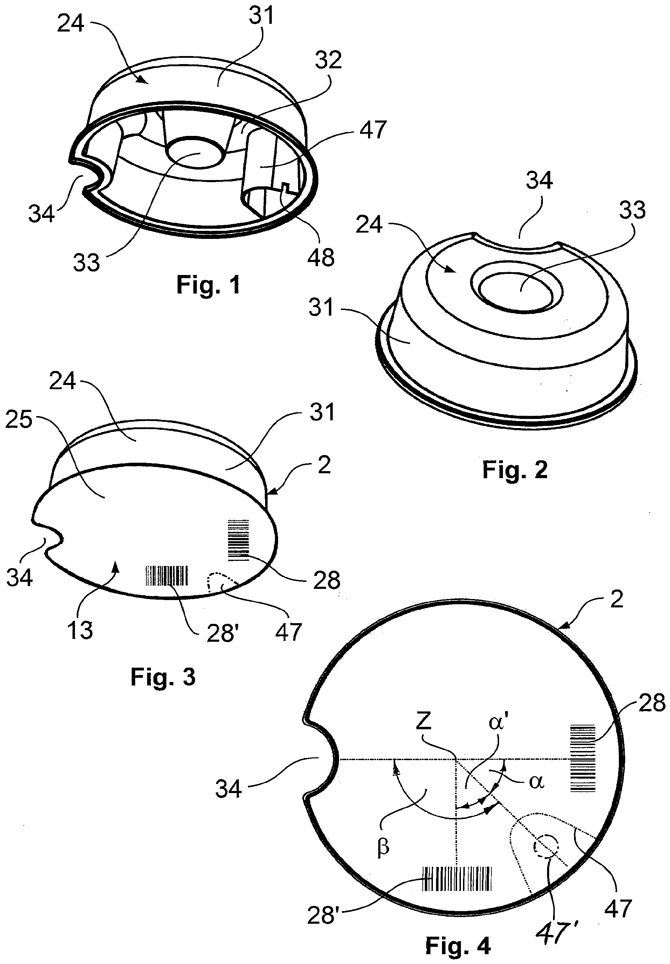

Die Figuren 1 und 2 zeigen einen Kapselkörper 24 für eine erfindungsgemässe Kapsel 2 aus zwei unterschiedlichen Perspektiven. Der Kapselkörper 24 umfasst eine Seitenwand 31 sowie einen Boden 32. Der Boden 32 weist eine kreisrunde Erhöhung 33 auf. Ferner ist die Seitenwand 31 und ein Teil des Bodens 32 mit einer Aussparung 34 versehen. Der Kapselkörper 24 weist in seinem Inneren einen Einlass 47 auf. Der Einlass 47 hat an seiner Stirnseite einen Schlitz 48.

Die Figur 3 zeigt eine erfindungsgemässe Kapsel 2 in montiertem Zustand. Der Kapselkörper 24 ist mit einem Deckel 25 verschlossen, welcher eine Kontaktfläche 13 der Kapsel 2 bildet. Auf dem Deckel 25 sind zwei Barcodes 28, 28' aufgedruckt. Der Kapselkörper 24 bildet zusammen mit dem Deckel 25 einen Aufnahmeraum zur Aufnahme einer Ausgangssubstanz zur Herstellung eines Getränkes. Im Aufnahmeraum ist ein Einlass 47 angeordnet, welcher in der vorliegenden Darstellung strichliert dargestellt ist. Zum Einleiten einer Flüssigkeit in den Einlass 47 muss der Deckel 25 der Kapsel 2 penetriert werden.

Die Figur 4 zeigt eine Draufsicht auf eine erfindungsgemässe Kapsel 2 von der Seite des Deckels. Auf dem Deckel sind ein erster Barcode 28 und ein zweiter Barcode 28' angeordnet. Zudem ist der Einlass 47 ähnlich wie in Figur 3 strichliert dargestellt. Zusätzlich ist mit 47' auch noch ein an der Deckeloberfläche nicht sichtbarer Einlass angedeutet, wie er sich in der Getränkezubereitungsmaschine ergibt. Es ist zu erkennen, dass das Zentrum des erste maschinenlesbareren Code 28 in Bezug auf das Zentrum Z des Deckels in einem Winkelabstand von α +50° zum Einlass 47 angeordnet ist. Der zweite maschinenlesbare Code 28' ist in einem Winkelabstand von α -45° zum Einlass 47 angeordnet. Die Kapsel weist ferner eine Aussparung 34 auf. Der Einlass 47 ist in Bezug auf das Zentrum Z des Deckels in einem Winkelabstand β von 130° angeordnet.

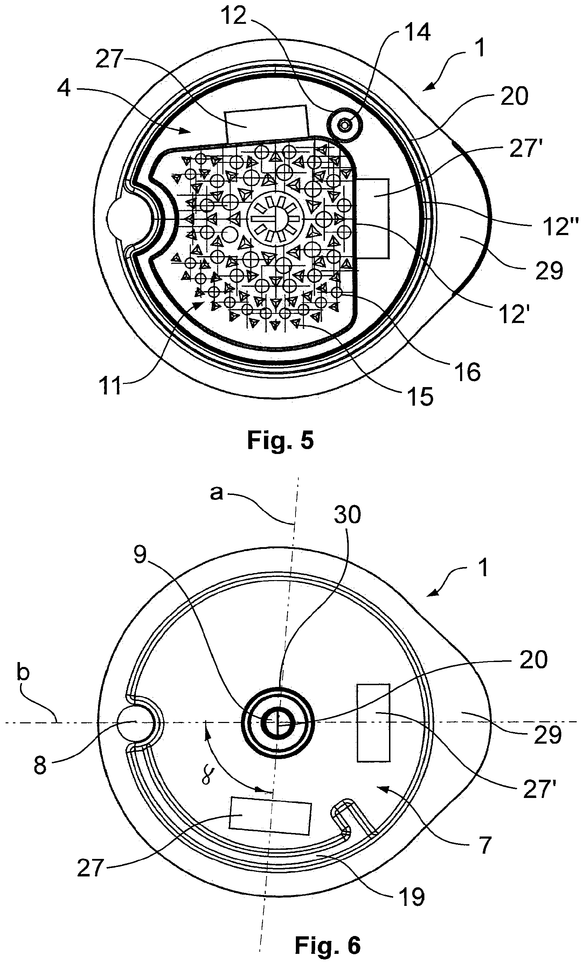

Die Figur 5 zeigt Einzelheiten zur Kapselseite 4 eines Adapters 1 zur Verwendung mit einer erfindungsgemässen Kapsel 2. Es ist zu erkennen, dass der Adapter 1 eine im Wesentlichen kreisrunde Form hat und eine Lasche 29 aufweist. Die Lasche 29 dient einerseits als Griffelement für einen Benutzer und andererseits zur Ausrichtung des Adapters 1 in einer Getränkezubereitungsvorrichtung 3. Die Kapselseite 4 des Adapters 1 weist einen Ableitbereich 11 auf. Der Ableitbereich 11 ist von einem Dichtungselement 12' umsäumt. Ferner ist an der Kapselseite 4 eine Hohlkanüle 14 als Mittel zum Einleiten einer Flüssigkeit in eine Kapsel 2 angeordnet. Die Hohlkanüle 14 ist von einem Dichtungselement 12 umsäumt. Der Ableitbereich 11 weist eine Vielzahl von Penetrationselementen in Form von Dreieckspyramiden 15 auf. Neben diesen Pyramiden 15 sind im Ableitbereich 11 auch Stützelemente in Form von Kegelstümpfen 16 angeordnet. Zum Positionieren einer Kapsel 2 auf dem Adapter 1 weist dieser einen umlaufenden Kragen 20 auf. Ferner sind zwei transparente Bereiche 27, 27' vorhanden, durch welche ein Code auf der Kontaktfläche 13 einer auf den Adapter 1 aufgesetzten Kapsel 2 von der Vorrichtungsseite des Adapters 1 maschinenlesbar ist.

Die Figur 6 zeigt die Vorrichtungsseite 7 des Adapters 1 gemäss Figur 5 mit den transparenten Bereichen 27, 27'. Darüber hinaus ist der Auslass 9 zu erkennen, der von einem umlaufenden Kragen 30 umgeben ist. Der Einlass 8 des Adapters 1 ist in dessen Peripherie angeordnet und mündet in einen Kanal 19, von dem in der vorliegenden Abbildung lediglich die Aussenkontur sichtbar ist. Der transparente Bereich 27 ist derart angeordnet, dass die Linie a, die den Auslass 9 mit dem Zentrum des transparenten Bereiches 27 verbindet, und eine Linie b, die den Einlass 8 mit dem Auslass 9 verbindet, durch einen Winkelabstand γ von 85° getrennt sind.

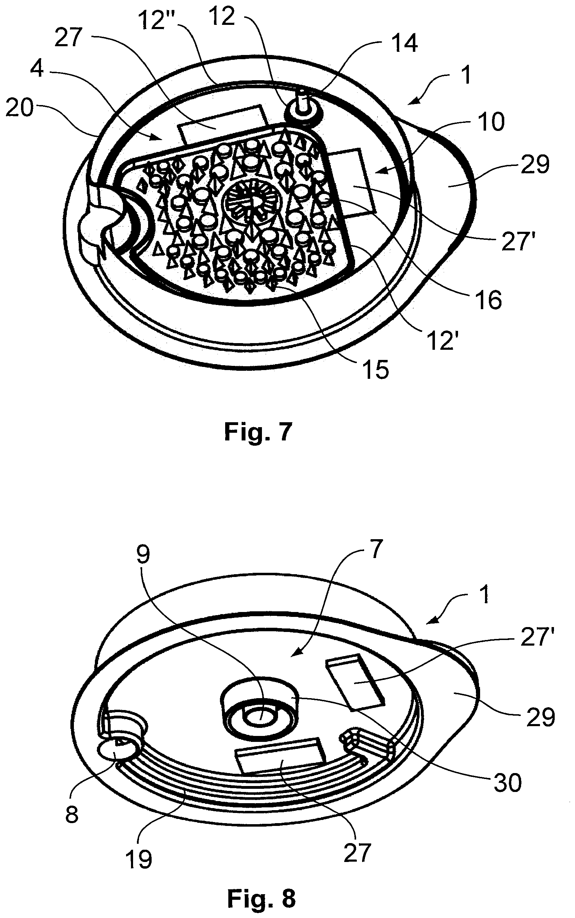

In den Figuren 7 und 8 sind die Kapsel- und Vorrichtungsseite des Adapters 1 zusätzlich noch in perspektivischer Darstellung gezeigt. Es ist zu erkennen, dass der Adapter 1 eine im Wesentlichen scheibenförmige Form hat.

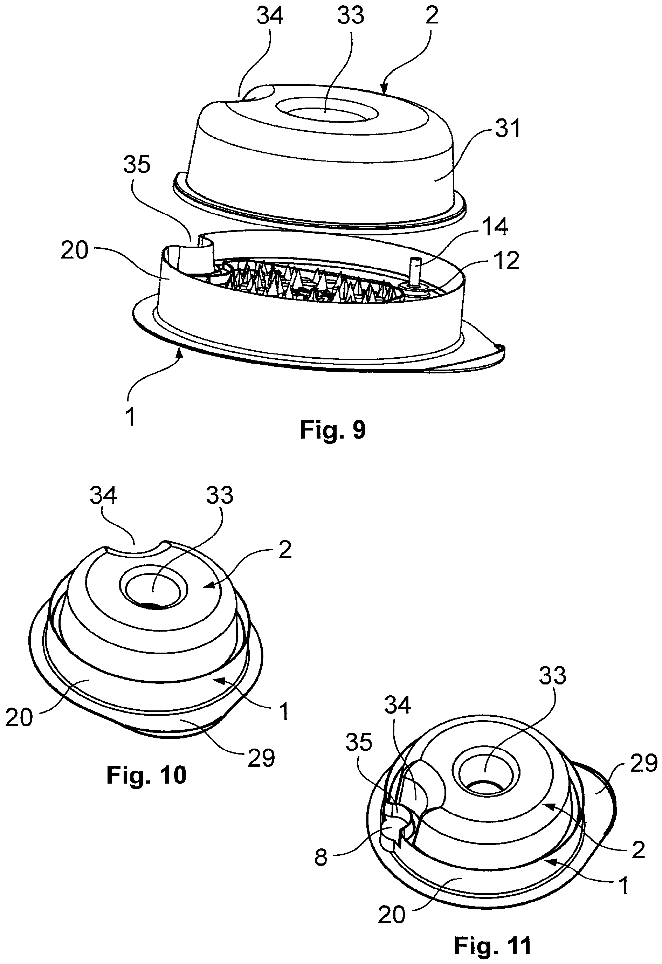

In Figur 9 sind die erfindungsgemässe Kapsel 2 sowie ein zum Gebrauch mit dieser vorgesehener Adapter 1 in Zusammenschau gezeigt. Es ist zu erkennen, dass die Aussparung 34 der Kapsel 2 mit einer Einbuchtung 35 des umlaufenden Kragens 20 des Adapters 1 korrespondiert. Damit wird neben einer exakten Positionierung der Kapsel 2 auf dem Adapter 1 auch eine gewünschte Ausrichtung derselben erzielt.

In den Figuren 10 und 11 ist die Kapsel 2 auf den Adapter 1 aufgesetzt. Insbesondere in Figur 11 ist zu erkennen, dass die Aussparung 34 der Kapsel 2 und die Einbuchtung 35 des umlaufenden Kragens des Adapters 1 auch den erforderlichen Raum für den Einlass 8 bieten.

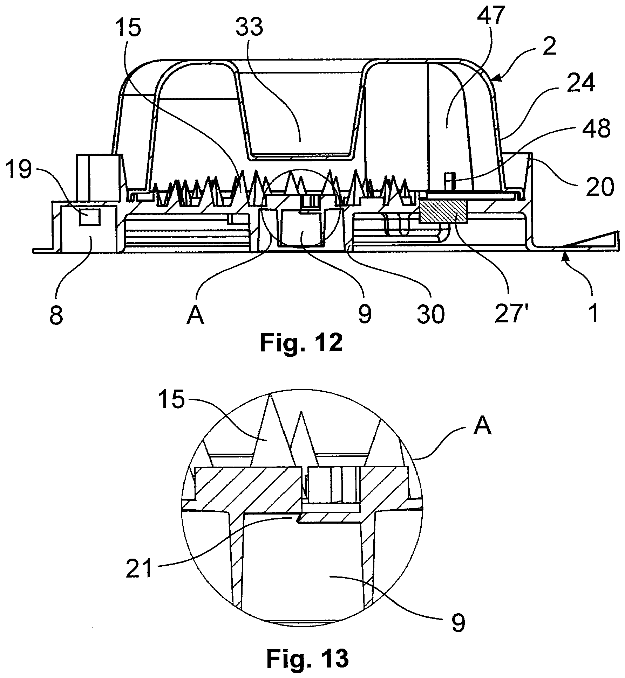

In der Figur 12 ist eine Schnittansicht der auf den Adapter 1 aufgesetzten Kapsel 2 gezeigt. Zur besseren Übersichtlichkeit ist der Deckel 25 der Kapsel 2 weggelassen. Die Schnittebene verläuft entlang der Geraden b (vgl. Fig. 6) durch den Einlass 8, den Auslass 9 und den transparenten Bereich 27' des Adapters 1. In der vorliegenden Darstellung ist gut zu erkennen, dass der Einlass 8 in den Kanal 19 mündet. Ebenfalls ist zu erkennen, dass der transparente Bereich 27' durch ein quaderförmiges Element aus einem transparenten Material gebildet ist, welches in eine Aussparung in Adapter 1 eingesetzt ist.

Die Figur 13 zeigt nähere Einzelheiten zum Teilbereich A der Figur 11. Es ist zu erkennen, dass die Mündung für die Flüssigkeit in den Auslass 9 als Spalt 21 ausgebildet ist. Dieser erzeugt bei der Zubereitung von Kaffeegetränken eine für einen Espresso typische Crema. Darüber hinaus erfüllt der Spalt 21 eine Ventilfunktion und kann so ein unbeabsichtigtes Nachtropfen von Flüssigkeit nach erfolgter Getränkezubereitung verhindern, wenn die Kapsel gemeinsam mit dem Adapter aus der Getränkezubereitungsvorrichtung entfernt wird. Ebenfalls ist in Figur 12 deutlich ein pyramidenförmiges Penetrationselement 15 zu erkennen.

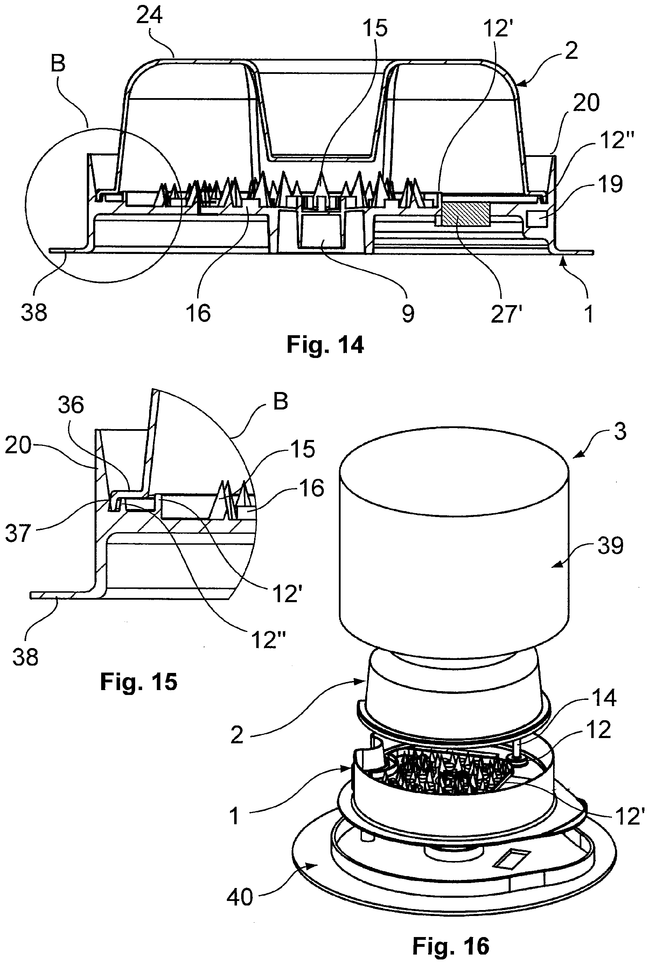

Die Figur 14 zeigt eine alternative Schnittansicht einer auf einen Adapter 1 aufgesetzten Kapsel 2 gemäss den Figuren 12 und 13. In diesem Fall verläuft die Schnittebene entlang der Geraden a, welche nahezu senkrecht zur Geraden b (vgl. Fig. 6) verläuft. Hier ist entsprechend der transparente Bereich 27' ersichtlich. Darüber hinaus ist ein weiterer Abschnitt des Kanals 19 sichtbar.

Die Figur 15 zeigt eine Vergrösserung des Teilbereichs B gemäss Figur 14. Es ist zu erkennen, dass der Kapselkörper 24 einen flanschartigen Rand 36 umfasst. Dieser weist an einem äusseren Bereich einen umlaufenden Kragen 37 auf, der im Wesentlichen parallel zur Seitenwand 31 verläuft und sich über die Kontaktfläche 13 hinaus erstreckt. Wenn die Kapsel 2 auf den Adapter 1 aufgesetzt ist, greift der Kragen 37 in eine durch den umlaufenden Kragen 20 und das Dichtungselement 12" des Adapters 1 gebildete Nut ein. Der Kragen 20 des Kapselkörpers 24 geht mit dem Adapter 1 eine Dichtverbindung ein. Gleichzeitig geht das Dichtungselement 12" mit dem Kapselkörper 24 eine Dichtverbindung ein. In den Figuren 14 und 15 ist der Deckel 25 der Kapsel 2 wegelassen. Es ist allerdings vorgesehen, einen solchen derart zentriert am flanschartigen Rand 36 des Kapselkörpers 24 anzubringen, dass dieser nicht zwischen das Dichtungselement 12" und den Kapselkörper 24, bzw. zwischen den Kragen 37 und den Adapter 1 gerät. Es hat sich gezeigt, dass dies die Dichtwirkung signifikant reduzieren würde. Beim gezeigten Ausführungsbeispiel ist es vorgesehen, dass der Deckel 25 der Kapsel 2 zusätzlich eine Dichtverbindung mit dem Dichtelement 12' eingeht.

Figur 16 zeigt eine räumliche Zusammenschau einer erfindungsgemässen Kapsel 2, eines Adapters 1 sowie des Oberteils 39 und des Unterteils 40 eines Kapselhalters einer Getränkezubereitungsvorrichtung 3.

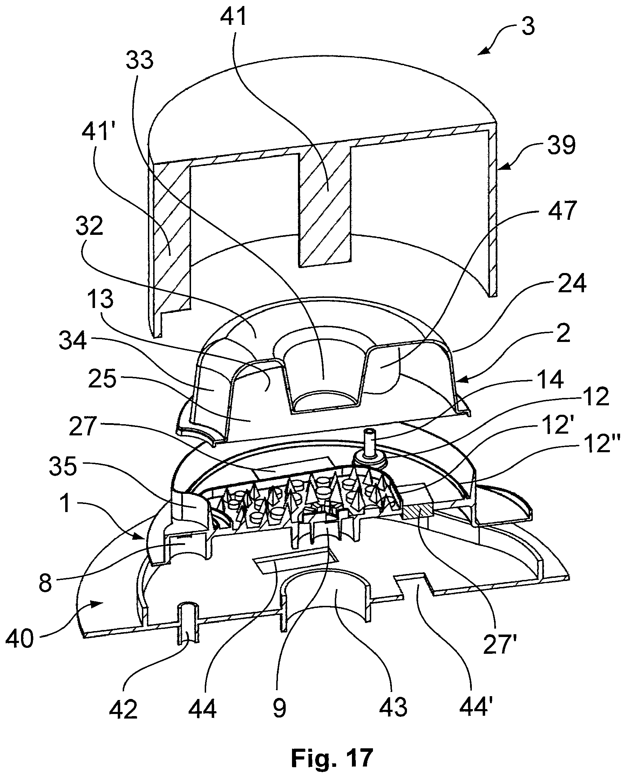

Figur 17 zeigt eine perspektivische Schnittansicht der Zusammenschau gemäss Figur 16. Es ist zu erkennen, dass der Oberteil 39 des Kapselhalters zwei Stempel 41, 41' aufweist. Der Stempel 41 greift von der Unterseite in die Erhöhung 31 des Bodens 32 der Kapsel 2 ein. Der Stempel 41' greift in die Einbuchtung 35 des umlaufenden Kragens 20 ein. Der Unterteil 40 des Kapselhalters weist einen Einlaufstutzen 42 auf, welcher in den Einlass 8 des Adapters 1 eingreift und über den eine unter Druck stehende Flüssigkeit bereitstellbar ist. Darüber hinaus weist der Unterteil 40 des Kapselhalters einen Auslaufstutzen 43 auf, in welchen der Auslass 9 des Adapters 1 eingreifen kann. Der Unterteil 40 des Kapselhalters verfügt ferner über zwei Fenster 44, 44`, über welche eine Lesevorrichtung, welche Bestandteil der Getränkezubereitungsvorrichtung 3 ist, einen auf der Kontaktfläche 13 der Kapsel 2 angebrachten maschinenlesbaren Code, beispielsweise ein Barcode 28, 28', durch den Adapter 1 lesen kann.

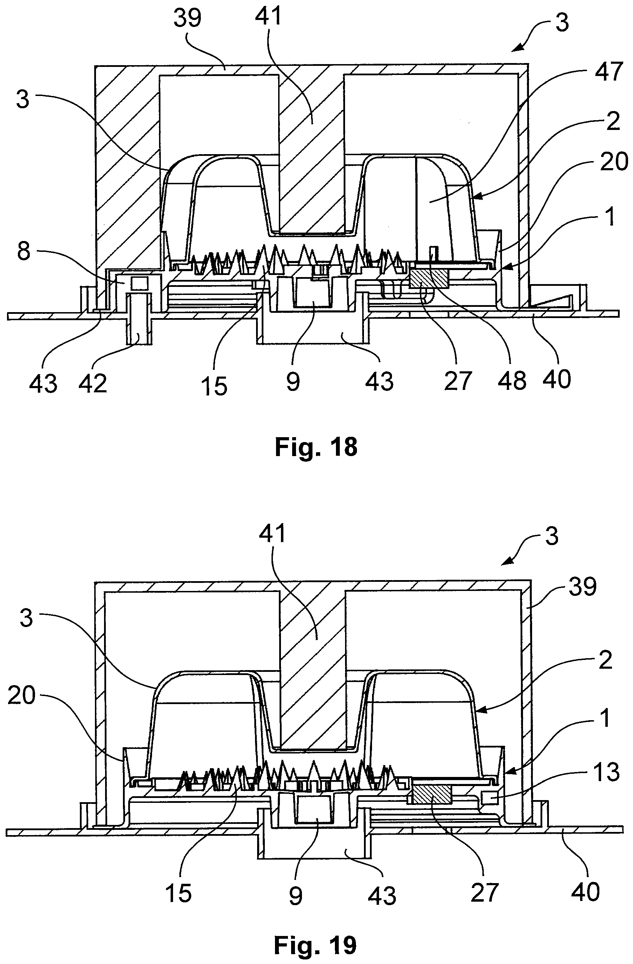

Die Figuren 18 und 19 zeigen den erfindungsgemässen Adapter 1 mit einer Kapsel 2 im Kapselhalter 39, 40 einer Getränkezubereitungsvorrichtung 3 in geschlossenem Zustand. Es ist zu erkennen, dass der flanschartige Rand 38 des Adapters 1 zwischen dem Oberteil 39 und dem Unterteil 40 des Kapselhalters eingeklemmt ist, womit dieser dichtend abgeschlossen ist. Ferner ist zu erkennen, wie der Stempel 41 auf die Unterseite der Erhöhung 33 im Kapselboden 32 wirkt. Dadurch wird die Kapsel 2 auf den Adapter 1 gepresst, womit die Dichtungselemente 12, 12', 12" sowie der umlaufende Kragen 37 gemeinsam mit der Kontaktfläche 13 der Kapsel 2 dichtend abschliessen. Ferner presst der Stempel 41' auf den Einlass 8 des Adapters 1. Dadurch wird der Übergang vom Einlaufstutzen 42 auf den Einlass 8 abgedichtet. Zur besseren Übersichtlichkeit ist in den Figuren 17 und 18 der die Kontaktfläche 13 bildende Deckel 25 weggelassen.

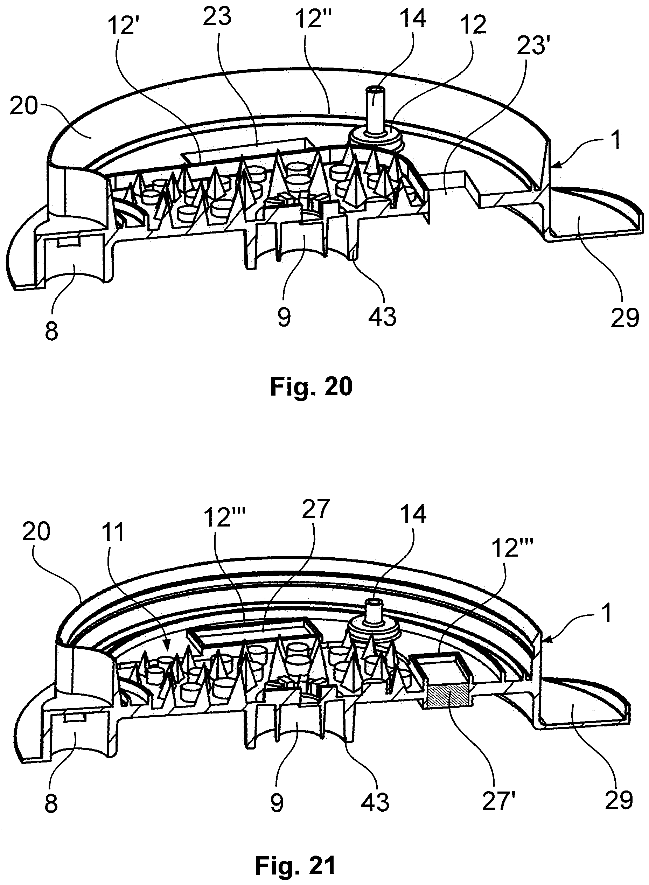

Die Figur 20 zeigt eine alternative Ausführungsform eines Adapters 1. Dieser weist Fenster 23, 23' auf, durch welche ein auf der Kontaktfläche 13 der Kapsel 2 angebrachter maschinenlesbarer Code durch die Getränkezubereitungsvorrichtung 3 lesbar ist, wenn der Adapter 1 gemeinsam mit der Kapsel 2 in die Getränkezubereitungsvorrichtung 3 eingelegt ist.

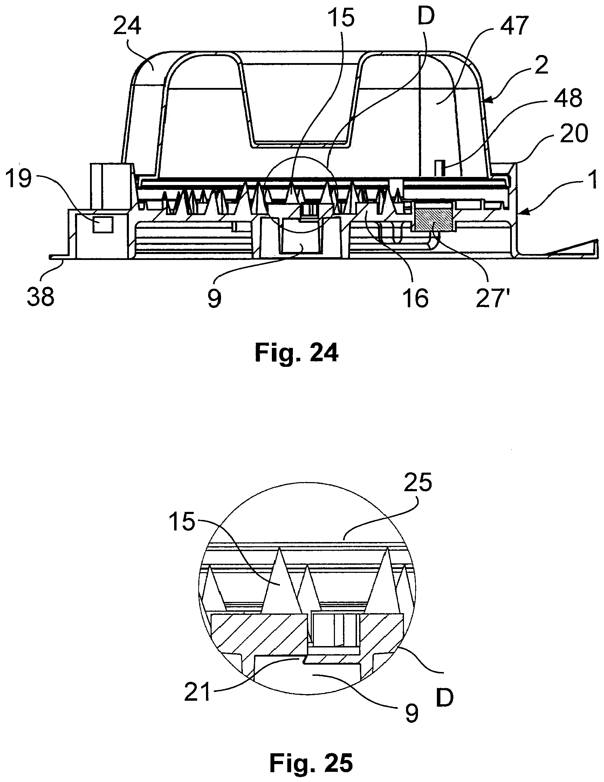

Die Figuren 21 bis 25 zeigen ein weiteres Ausführungsbeispiel eines Adapters 1. Dieses ist dem Beispiel gemäss den Figuren 5 bis 19 verwandt. Allerdings ist um den Ableitbereich 11 kein Dichtungselement 12' angeordnet. Dafür sind die transpatenten Bereiche 27, 27' jeweils von einem Dichtungselement 12"' umsäumt. Denkbar wäre auch ein Adapter, der sowohl Dichtungselemente 12', die den Ableitbereich 11 umsäumen, als auch Dichtungselemente 12"', die die transpatenten Bereiche 27, 27' bzw. Fenster 23, 23' umsäumen, aufweist.

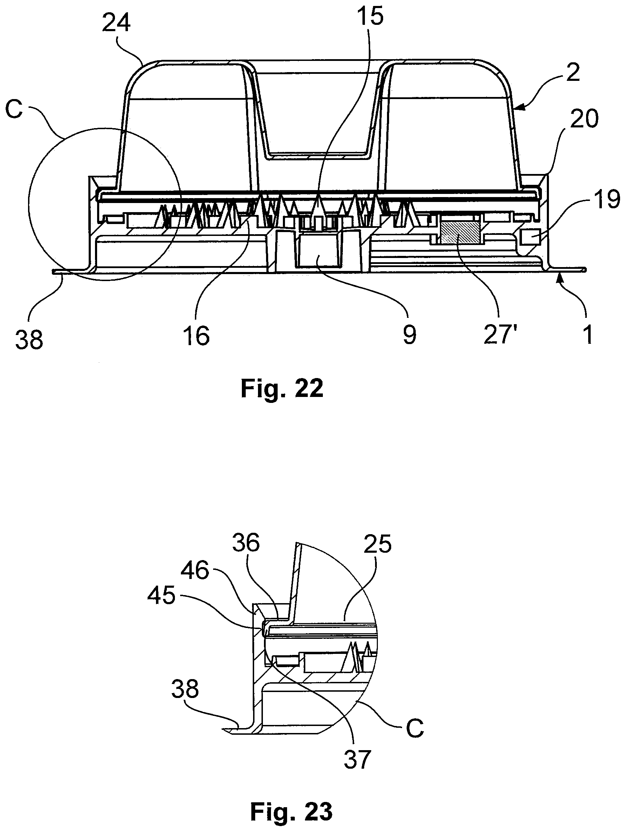

Wie insbesondere aus Figur 23 ersichtlich ist, weist beim besagten Ausführungsbeispiel der umlaufende Kragen 20 des Adapters 1 Rastmittel in Form einer Grube 45 und einer Rastnase 46 auf, mit denen der umlaufende Kragen 37 des flanschartigen Randes 36 des Kapselkörpers 24 verrastbar ist. Damit kann die Kapsel 2 in einer Bereitschaftsposition gehalten werden, in der die Kontaktfläche 13 der Kapsel, im vorliegenden Fall durch den Deckel 25 gebildet, vor den oben beschriebenen Penetrationselementen gehalten ist. Erst beim Einlegen der Kapsel 2 und des Adapters 1 in die Getränkezubereitungsvorrichtung 3 und Verschliessen der Vorrichtung 3 kommt es zu einer Penetration des Deckels 25.

## Patentansprüche

1. Kapsel (2) zur Zubereitung eines Getränkeproduktes umfassend einen Kapselkörper (24), einen Deckel (25) und einen Einlass (47) zum Einleiten eines Fluids in die Kapsel (1), wobei der Kapselkörper (24) zur Bildung eines geschlossenen Aufnahmeraumes vom Deckel (25) abgedeckt und der Einlass (47) in Bezug auf ein Zentrum (Z) des Deckels (25) exzentrisch an der Kapsel (1) angeordnet ist, wobei auf dem Deckel (25) ein erster maschinenlesbarer Code (28) exzentrisch angebracht, insbesondere gedruckt, ist, **dadurch gekennzeichnet, dass** der erste maschinenlesbare Code (28), insbesondere dessen Zentrum, in Bezug auf das Zentrum (Z) des Deckels in einem Winkelabstand (α) zum Einlass (47) angeordnet ist, wobei der Winkelabstand (α) einen Betrag von höchstens 70°, vorzugsweise höchstens 60°, bevorzugterweise höchstens 50°, hat.

2. Kapsel (2) nach Anspruch 1, wobei auf dem Deckel (25) neben dem ersten maschinenlesbaren Code (28) ein zweiter maschinenlesbarer Code (28') exzentrisch angebracht, insbesondere gedruckt, ist, wobei der erste maschinenlesbare Code (28), insbesondere dessen Zentrum, in Bezug auf das Zentrum (Z) des Deckels in einem positiven Winkelabstand (α) und der zweite maschinenlesbare Code (28'), insbesondere dessen Zentrum, in einem negativen Winkelabstand (α') zum Einlass (47) angeordnet ist, wobei die Winkelabstände (α, α') einen Betrag von höchstens 70°, vorzugsweise höchstens 60°, bevorzugterweise höchstens 50°, haben.

3. Kapsel (2) nach Anspruch 2, wobei der Betrag des ersten und des zweiten Winkelabstandes (α, α') gleich gross sind.

4. Kapsel (2) nach einem der Ansprüche 1 bis 3, wobei der Kapselkörper (24) in einem Randbereich eine Aussparung (34) aufweist und der Winkelabstand (β) von der Aussparung (34) zum Einlass (47) in Bezug auf das Zentrum (Z) des Deckels einen Betrag von wenigstens 90°, vorzugsweise wenigstens 120°, bevorzugterweise wenigstens 130°, hat.

5. Kapsel (2) nach einem der Ansprüche 1 bis 4, wobei der Einlass (47) im Inneren des Aufnahmeraumes angeordnet ist, insbesondere an den Deckel (25) anschliesst und vorzugsweise von diesem verschlossen ist.

6. Kapsel (2) nach einem der Ansprüche 1 bis 5, wobei zumindest ein maschinenlesbarer Code (28, 28`) ein eindimensional-maschinenlesbarer Code, insbesondere ein Strichcode, ein zweidimensional-maschinenlesbarer Code oder ein RFID-Code ist.

7. Kapsel (2) nach einem der Ansprüche 1 bis 6, wobei zumindest ein maschinenlesbarer Code (28, 28') Parameter zur Zubereitung des Getränkeproduktes, insbesondere ausgewählt aus einer Liste bestehend aus Temperatur, Volumen, Durchflussrate und Zusammensetzung einer in die Kapsel einzuleitenden Flüssigkeit, enthält und/oder damit verknüpft ist.

8. Kapsel (2) nach Anspruch 7, wobei zumindest ein maschinenlesbarer Code (28, 28') zumindest eine Getränkezubereitungsroutine enthält und/oder damit verknüpft ist.

9. Kapsel (2) nach einem der Ansprüche 1 bis 8, wobei der Deckel aus einer Verbundstruktur, insbesondere umfassend eine Aluminiumfolie und ein Vlies, gebildet ist.

10. Kapsel (2) nach einem der Ansprüche 1 bis 9, wobei der Kapselkörper (24) aus einem Kunststoffmaterial, insbesondere durch ein Spritzguss- oder Tiefziehverfahren, hergestellt ist.

11. Kapsel (2) nach einem der Ansprüche 1 bis 10, wobei der Kapselkörper (24) und der Deckel (25) sauerstoff- und/oder aromadicht sind.

12. Getränkezubereitungssystem umfassend eine Kapsel (2) nach einem der Ansprüche 1 bis 11 und eine Getränkezubereitungsmaschine (3), wobei die Getränkezubereitungsmaschine eine Aufnahme (39, 40) mit zumindest einem Lesegerät aufweist, die Kapsel in die Aufnahme (39, 40) einsetzbar und zumindest ein maschinenlesbarer Code (28, 28') mit dem zumindest einen Lesegerät lesbar ist.

13. Getränkezubereitungssystem nach Anspruch 12, wobei das Lesegerät als zumindest ein Strichcode-Scanner, insbesondere als zwei rechtwinklig zueinander angeordnete Strichcode-Scanner, oder als Kamerasystem ausgebildet ist.

14. Getränkezubereitungssystem nach einem der Ansprüche 12 oder 13, zusätzlich umfassend einen Adapter (1), wobei der Adapter (1) zum Einleiten einer Flüssigkeit in die Kapsel (2) sowie zum Ableiten einer Flüssigkeit aus der Kapsel (2) gemeinsam mit dieser in die Getränkezubereitungvorrichtung einlegbar ist.

15. Kit umfassend wenigstens eine Kapsel nach einem der Ansprüche 1 bis 11 und wenigstens einen Adapter (1), wobei der Adapter gemeinsam mit der Kapsel in eine Getränkezubereitungsmaschine einlegbar ist, zum Einleiten einer Flüssigkeit in die Kapsel (2) sowie zum Ableiten einer Flüssigkeit aus der Kapsel (2).
